# EUROPÄISCHE PATENTSCHRIFT

(11) **EP 1 527 293 B1**
(45) Veröffentlichungstag und Bekanntmachung des Hinweises auf die Patenterteilung: **19.04.2006**
(21) Anmeldenummer: 03784132.7
(22) Anmeldetag: 01.08.2003
(51) Int. Cl.: F16H 57/02

(54) **LAGERUNG IN EINEM GETRIEBEGEHÄUSE**
BEARING ARRANGEMENT IN A GEARBOX HOUSING
LOGEMENT DE PALIER DANS UN CARTER DE BOITE DE VITESSES

(30) Priorität: 07.08.2002 DE 10236089
(43) Veröffentlichungstag der Anmeldung: 04.05.2005
(73) Patentinhaber: ZF FRIEDRICHSHAFEN AG, 88038 Friedrichshafen (DE)
(72) Erfinder: DÖPFERT, Hagen, 88131 Lindau (DE)
(86) Internationale Anmeldenummer: PCT/EP2003/008508
(87) Internationale Veröffentlichungsnummer: WO 2004/015311

(56) Entgegenhaltungen:
- DE-A- 4 123 493
- DE-A- 10 009 486
- US-A- 5 020 385

## Beschreibung

Die Erfindung betrifft eine Lagerung in einem Getriebegehäuse mit den Merkmalen des Anspruchs 1.

In Getriebegehäusen sind zwei hintereinander angeordnete Räder gehalten auf jeweils unabhängig voneinander rotierenden, koaxialen Wellen, die herkömmlicherweise jeweils an beiden Enden je ein Lager aufweisen, die im Getriebegehäuse gehalten sind. Eine derartige, beispielsweise aus der gattungsgemäßen DE 100 09 486 A1 bekannte Anordnung zeist folgendes:
- Zwischen beiden Wellen ist eine Zwischenwand des Gehäuses notwendig, die einen komplizierten Aufbau des Getriebegehäuses zur Folge hat,
- diese Zwischenwand benötigt axialen Bauraum,
- bei geringem Achsabstand zu benachbarten Wellen wird die Bauraumproblematik mit der Zwischenwand noch größer, denn dann kann für die benachbarte Welle noch ein Zwischenring erforderlich werden,
- beide Lager zwischen den Wellen erfordern axialen und radialen Bauraum,
- auch wenn beide Wellen gleich schnell und in gleiche Richtung drehen, fällt Verlustleistung an vier Lagern an und
- bei Kegelrollenlagern müssen beide Wellen separat eingestellt werden, woraus Montageaufwand folgt.

Aus der US 5,020,385 ist eine Lagerung in einem Getriebegehäuse bekannt, die ein auf einer ersten Welle gehaltenes Rad und mehrere auf einer zweiten Welle angeordnete Räder aufweist. Die auf der zweiten Welle angeordneten Räder sind über Kupplungen mit dieser zweiten Welle verbindbar. Beide Wellen sind koaxial zueinander und im wesentlichen nebeneinander angeordnet, wobei die erste Welle an einem Ende und die zweite Welle an einem gegenüberliegenden Ende über je ein Kegellager im Getriebegehäuse gehalten sind. Die zweite Welle ist in der ersten Welle über ein Rollenlager gelagert, welches nur Radialkräfte aufnehmen kann.

Aufgabe der Erfindung ist es, eine einfache, kostengünstige und raumsparende Lagerung in einem Getriebegehäuse zu schaffen für mindestens zwei hintereinander angeordnete Räder auf jeweils unabhängig voneinander rotierenden, koaxialen Wellen bei reduzierter Verlustleistung und reduziertem Montageaufwand.

Die Lösung erfolgt mit einer Lagerung in einem Getriebegehäuse mit den Merkmalen des Anspruchs 1. Vorteilhafte Ausgestaltungen der Erfindung sind in den Unteransprüchen dargestellt.

Gemäß der Erfindung weist eine Lagerung in einem Getriebegehäuse mindestens 2 hintereinander angeordnete Räder auf jeweils unabhängig voneinander rotierenden, koaxialen Wellen auf, die jeweils an gegenüberliegenden Enden mit je einem Lager im Getriebegehäuse gehalten sind. Mindestens ein weiteres Lager ist zwischen der einen und der anderen Welle vorgesehen zur Lagerung der Wellen ineinander, so dass eine Zwischenwand im Getriebegehäuse entfallen kann. Die erfindungsgemäße Lagerung bietet im wesentlichen die folgenden Vorteile:
- einfacher Gehäuseaufbau durch Entfall der Zwischenwand,
- Reduktion des axialen Bauraums durch Entfall der Zwischenwand,
- Reduktion des radialen Bauraums durch Entfall von Lager zwischen den Wellen mit größerem Durchmesser als die Wellen,
- Reduktion des axialen Bauraums durch durch platzsparende Lager zwischen beiden Wellen,
- Kostenvorteil durch kostengünstigere axiale und radiale Nadellager zwischen beiden Wellen,
- Reduktion an Gewicht durch Entfall der Zwischenwand und durch leichtere Lager zwischen beiden Wellen,
- nur Verlustleistung an äusseren Lagern wenn beide Wellen gleich schnell und in gleiche Richtung drehen und
- bei Einsatz von fest/los Lagern, wie z. B. Kugel-/Kegellagern, können beide Wellen gemeinsam eingestellt werden mit reduziertem Montageaufwand.

Gemäß einer bevorzugten Ausgestaltung der Erfindung umfaßt das weitere Lager ein Radiallager zwischen der einen und der anderen Welle zur Aufnahme radialer Kräfte.

Gemäß einer weiteren bevorzugten Ausgestaltung der Erfindung umfaßt das weitere Lager ein weiteres Radiallager zur Aufnahme radialer Kräfte, so dass radiale Kräfte für eine Biegebelastung der beiden Wellen abgefangen werden, und ein Axiallager, das axiale Kräfte zwischen der einen und der anderen Welle ableitet.

Gemäß einer weiteren bevorzugten Ausgestaltung der Erfindung umfaßt das weitere Lager ein Kegellager zwischen der einen und der anderen Welle, das sowohl radiale und axiale Kräfte aufnehmen kann.

Gemäß einer bevorzugten Ausgestaltung der Erfindung weist die Lagerung in einem Getriebegehäuse mindestens zwei hintereinander angeordnete Räder auf jeweils unabhängig voneinander rotierenden, koaxialen Wellen auf, von denen eine an beiden Enden und die andere an einem Ende je ein fest/los Lager, wie z. B. Kugel-/Kegellager, aufweisen, die im Getriebegehäuse gehalten sind. Mindestens ein weiteres Lager ist zwischen der einen und der anderen Welle vorgesehen. Die erfindungsgemäße Lagerung bietet im wesentlichen die folgenden Vorteile:
- Reduktion des axialen Bauraums weil die Zwischenwandnur ein Lager aufnimmt und
- nur Verlustleistung an drei äusseren Lagern wenn beide Wellen gleich schnell und in gleiche Richtung drehen, anstelle von Verlustleistung an vier äusseren Lagern.

Gemäß einer weiteren bevorzugten Ausgestaltung der Erfindung umfasst das Getriebegehäuse einen justierbar montierten Stirntriebdeckel. Eines der Lager der jeweils unabhängig voneinander rotierenden, koaxialen Wellen ist im Stirntriebdeckel und das andere Lager im Getriebegehäuse montiert. Mit der einseitigen Lagerung in dem zum Getriebegehäuse justierbaren Stirntriebdeckel ist das Ausrichten der jeweils unabhängig voneinander rotierenden, koaxialen Wellen vereinfacht.

Die Erfindung wird im folgenden anhand bevorzugter Ausführungsbeispiele dargestellt.
Es zeigen:
- Fig. 1: einen Querschnitt durch eine Lagerung in einem Getriebegehäuse,
- Fig. 2: einen Querschnitt durch eine Lagerung gemäß der Erfindung,
- Fig. 3: einen Querschnitt durch eine alternative Lagerung gemäß der Erfindung und

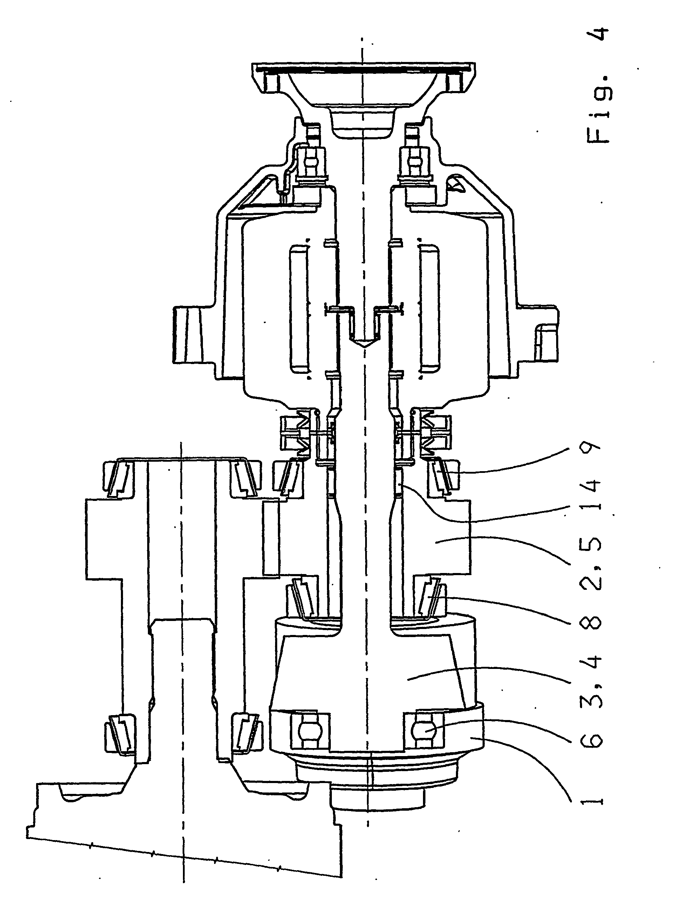

- Fig. 4: einen Querschnitt durch eine weitere alternative Lagerung gemäß der Erfindung.

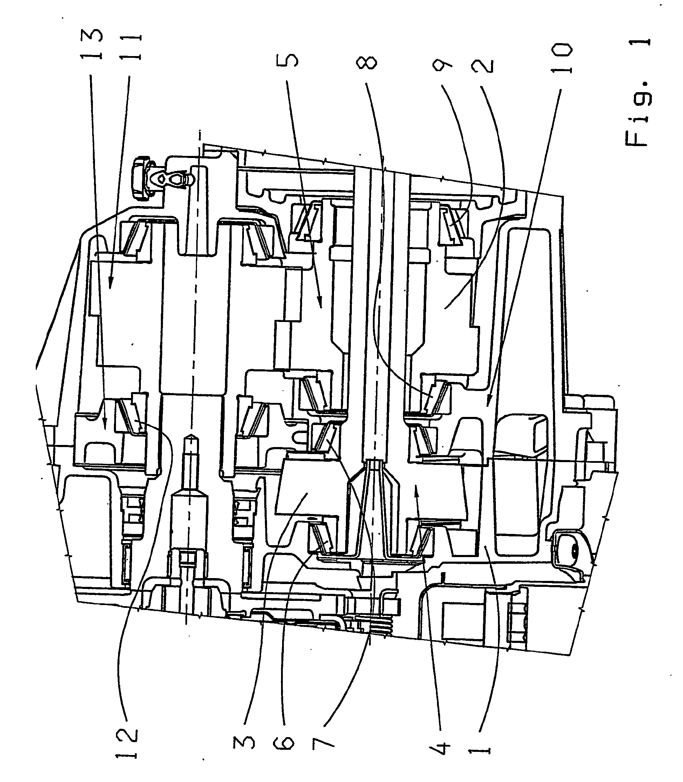

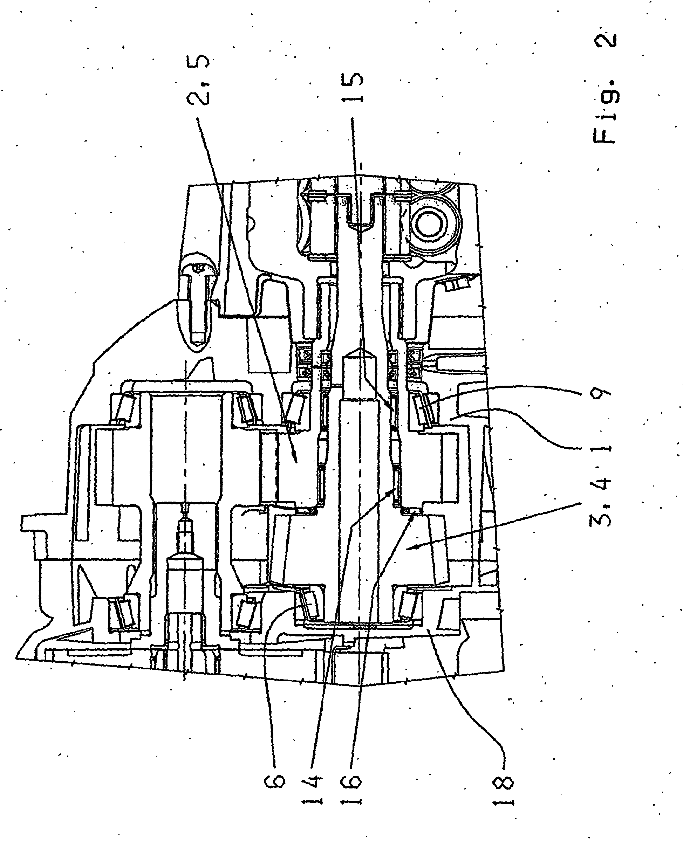

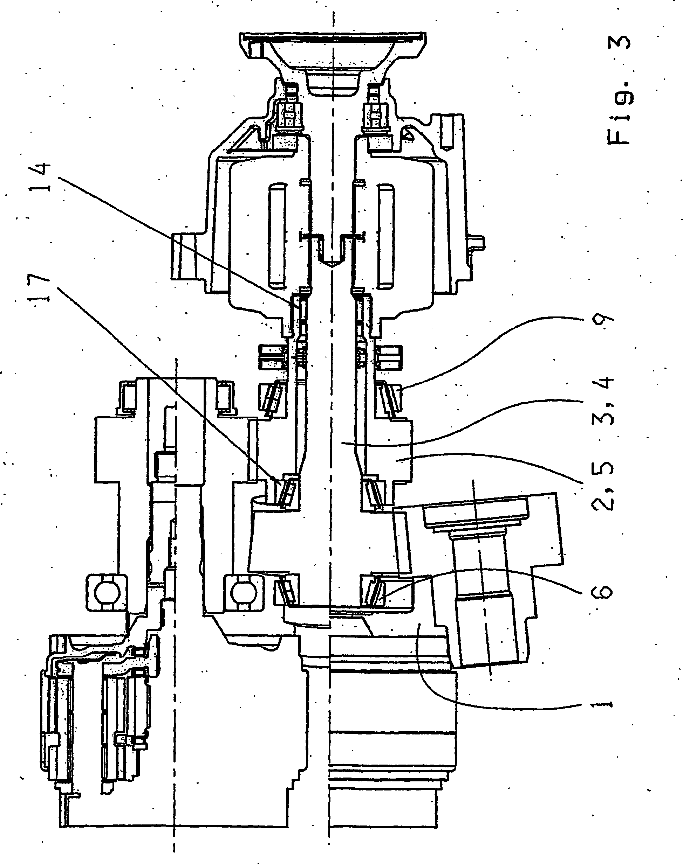

Fig. 1:
   In einem Getriebegehäuse 1 sind zwei hintereinander angeordnete Räder 2, 3 gehalten auf jeweils unabhängig voneinander rotierenden, koaxialen Wellen 4, 5, die herkömmlicherweise jeweils an beiden Enden je ein Kegellager 6, 7, 8 und 9 aufweisen, die unter anderem von einer Zwischenwand 10 im Getriebegehäuse 1 gehalten sind. Eine benachbarte Welle 11 ist mit einem Lager 12 an einem Zwischenring 13 im Getriebegehäuse 1 gehalten.
Fig. 2:
   Entsprechende Merkmale sind mit den Bezugszeichen aus Fig. 1 bezeichnet. Die zwei hintereinander angeordneten Räder 2, 3 sind gehalten auf den jeweils unabhängig voneinander rotierenden, koaxialen Wellen 4, 5, die jeweils an den äusseren Enden je eines der Lager 6 und 9 aufweisen, von denen Lager 6 in einem am Getriebegehäuse 1 montierten Stirntriebdeckel 18 und Lager 9 im Getriebegehäuse 1 gehalten sind. Welle 5 ist mit Radiallagern 14, 15 und einem Axiallager 16 an Welle 4 gelagert.
   Lager 6 und/oder Lager 9 können als Kugel- oder Kegelrollenlager ausgebildet sein, wobei das Axiallager 16 bei einer Ausbildung der Lagerung mit Kugellagern 6 und 9 entfallen kann und dann die Kugellager 6 und 9 mit den Radiallagern 14, 15 die jeweils unabhängig voneinander rotierenden, koaxialen Wellen 4, 5 lagern.
Fig. 3:
   Entsprechende Merkmale sind mit den Bezugszeichen aus Fig. 1 und 2 bezeichnet. Im Getriebegehäuse 1 sind die zwei hintereinander angeordneten Räder 2, 3 gehalten auf den jeweils unabhängig voneinander rotierenden, koaxialen Wellen 4, 5, die jeweils an den äusseren Enden je eines der Lager 6 und 9 aufweisen, die in dem Getriebegehäuse 1 gehalten sind. Welle 5 ist mit Radiallager 14 und einem Kegellager 17 für axiale und radiale Kräfte an der Welle 4 gelagert.
Fig. 4:
   Entsprechende Merkmale sind mit den Bezugszeichen aus Fig. 1, 2 und 3 bezeichnet. Im Getriebegehäuse 1 sind die zwei hintereinander angeordneten Räder 2, 3 gehalten auf den jeweils unabhängig voneinander rotierenden, koaxialen Wellen 4, 5, die jeweils an den äusseren Enden je eines der Lager 6 und 9 aufweisen, die in dem Getriebegehäuse 1 gehalten sind. Lager 6 ist als Kugellager ausgebildet. Welle 5 ist mit Radiallager 14 an der Welle 4 und mit dem Kegellager 8 für axiale und radiale Kräfte in dem Getriebegehäuse 1 gelagert.

### Bezugszeichen

- 1: Getriebegehäuse
- 2: Rad
- 3: Rad
- 4: Welle
- 5: Welle
- 6: Kegellager
- 7: Kegellager
- 8: Kegellager
- 9: Kegellager
- 10: Zwischenwand
- 11: Welle
- 12: Lager
- 13: Zwischenring
- 14: Radiallager
- 15: Radiallager
- 16: Axiallager
- 17: Kegellager
- 18: Stirntriebdeckel

## Patentansprüche

1. Lagerung in einem Getriebegehäuse (1), umfassend mindestens zwei hintereinander angeordnete Räder (2, 3), die auf jeweils, unabhängig voneinander rotierenden, koaxialen Wellen (4, 5) gehalten sind, wobei die eine Welle (4) an einem Ende und die andere Welle (5) an einem gegenüberliegenden Ende je ein im Getriebegehäuse (1) gehaltenes Lager (6, 9) aufweisen, **dadurch gekennzeichnet daß** mindestens ein weiteres Lager zwischen der einen und der anderen Welle (4, 5) vorgesehen ist, welches sowohl Radial- als auch Axiaikräfte aufnehmen kann.

2. Lagerung gemäß Anspruch 1, **dadurch gekennzeichnet, dass** das weitere Lager ein als Zylinderrollen-, Kugel- oder Nadellager ausgebildetes Radiallager zwischen der einen und der anderen Welle (4, 5) umfaßt.

3. Lagerung gemäß Anspruch 1, **dadurch gekennzeichnet, dass** das weitere Lager ein weiteres Radiallager (14, 15) und ein weiteres Axiallager (16) zwischen der einen und der anderen Welle (4, 5) umfaßt.

4. Lagerung gemäß Anspruch 1, **dadurch gekennzeichnet, dass** das weitere Lager ein Kugel- oder Kegellager (17) zwischen der einen und der anderen Welle (4, 5) umfaßt.

5. Lagerung gemäß Anspruch 1, **dadurch gekennzeichnet, dass** das Getriebegehäuse (1) einen justierbar montierten Stirntriebdeckel (18) umfaßt und Lager (6) im Stirntriebdeckel (18) und Lager (9) im Getriebegehäuse (1) montiert sind.

## Claims

1. Bearing arrangement in a transmission housing (1), comprising at least two successively disposed wheels (2, 3), which are held on in each case mutually independently rotating, coaxial shafts (4, 5), wherein the one shaft (4) at one end and the other shaft (5) at an opposite end each have a bearing (6, 9) held in the transmission housing (1), **characterized in that** at least one further bearing is provided between the one and the other shaft (4, 5) and may take up both radial and axial forces.

2. Bearing arrangement according to claim 1, **characterized in that** the further bearing comprises a radial bearing in the form of a cylindrical roller bearing, ball bearing or needle bearing between the one and the other shaft (4, 5).

3. Bearing arrangement according to claim 1, **characterized in that** the further bearing comprises a further radial bearing (14, 15) and a further thrust bearing (16) between the one and the other shaft (4, 5).

4. Bearing arrangement according to claim 1, **characterized in that** the further bearing comprises a ball- or cone bearing (17) between the one and the other shaft (4, 5).

5. Bearing arrangement according to claim 1, **characterized in that** the transmission housing (1) comprises an adjustably mounted spur pinion cover (18) and bearing (6) is mounted in the spur pinion cover (18) and bearing (9) is mounted in the transmission housing (1).

## Revendications

1. Logement dans un carter de boîte de vitesses (1), comprenant au moins deux roues (2, 3) disposées l'une derrière l'autre qui sont maintenues sur des arbres coaxiaux (4, 5), tournant indépendamment l'un de l'autre, dans lequel l'un des arbres (4), au niveau d'une extrémité, et l'autre arbre (5), au niveau d'une extrémité opposée, comportent un palier (6,9 ) maintenu dans le carter de la boîte de vitesses (1), **caractérisé en ce qu'**au moins un palier supplémentaire est prévu entre les deux arbres (4, 5), qui peut absorber aussi bien les forces radiales que les forces axiales.

2. Logement selon la revendication 1, **caractérisé en ce que** le palier supplémentaire comprend un palier radial entre les deux arbres (4, 5) conçu comme un roulement à rouleaux cylindriques, un roulement à billes ou un roulement à aiguilles.

3. Logement selon la revendication 1, **caractérisé en ce que** le palier supplémentaire comprend un palier radial supplémentaire (14, 15) et un palier axial (16) entre les deux arbres (4, 5).

4. Logement selon la revendication 1, **caractérisé en ce que** le palier supplémentaire comprend un roulement à billes ou un roulement à rouleaux coniques (17) entre les deux arbres (4, 5).

5. Logement selon la revendication 1, **caractérisé en ce que** le carter de boîte de vitesses (1) comprend un couvercle à transmission à pignons droits (18), le palier (6) est monté dans le couvercle à transmission à pignons droits (18) et le palier (9) est monté dans le carter de boîte de vitesses (1).
